# EUROPEAN PATENT APPLICATION

(11) **EP 4 525 189 A1**
(43) Date of publication of application: **19.03.2025**
(21) Application number: 24197156.3
(22) Date of filing: 29.08.2024
(51) Int. Cl.: H01M 50/503, H01M 50/213, H01M 50/505, H01M 50/507, H01M 50/516, H01M 50/519

(54) **BUSBAR ASSEMBLY, BATTERY MODULE, AND BATTERY PACK**

(30) Priority: 12.09.2023 CN 202322483700 U
(71) Applicant: Eve Energy Co., Ltd., Huizhou, Guangdong 516006 (CN)
(72) Inventor: REN, Chaoju, Huizhou, Guangdong, 516006 (CN); LU, Jungao, Huizhou, Guangdong, 516006 (CN); ZHANG, Guojiang, Huizhou, Guangdong, 516006 (CN); JIANG, Jibing, Huizhou, Guangdong, 516006 (CN)
(74) Representative: Herrero & Asociados, S.L.

(57) **Abstract**

A busbar assembly (1) is configurable in a battery module. The busbar assembly includes: a busbar-set portion, comprising two outputting bars (13a, 13b) and a plurality of busbars (14), wherein, the plurality of busbars are disposed between the two outputting bars, each outputting bar comprises an inter-module welding portion (131) and an inner-module welding portion (132) connected to the inter-module welding portion; and a positioning plate (15a, 15b), wherein the outputting bars are disposed on a side of the positioning plate away from cells (20), the positioning plate is arranged with a support rib (152), the inter-module welding portion abuts against the support rib.

## Description

### TECHNICAL FIELD

The present disclosure relates to the field of batteries, and in particular to a busbar assembly, a battery module, and a battery pack.

### BACKGROUND

The battery pack includes a plurality of battery modules connected in series to each other. A plurality of cells constituting the battery module are connected to each other, by a busbar assembly, to form one structure. A copper bar or an aluminium bar is arranged between two adjacent busbar assemblies to allow two adjacent battery modules to be connected in series to each other. In order to integrate components of the busbar assembly to be one structure, in the art, an insulating film is arranged to bond the components of the busbar assembly to form one structure; or a plastic bracket is arranged to heat-rivet the components of the busbar assembly to form one structure. However, when two adjacent bus assemblies are connected in series by welding through the copper bar or the aluminium bar, a welded component may be heated to burn the insulating film or the plastic bracket directly connected thereto, such that a product yield may be affected.

### SUMMARY OF THE DISCLOSURE

The present disclosure provides a busbar assembly, configured in a battery module. The busbar assembly includes: a busbar-set portion, including two outputting bars and a plurality of busbars, wherein, the plurality of busbars are disposed between the two outputting bars, each outputting bar comprises an inter-module welding portion and an inner-module welding portion connected to the inter-module welding portion; and a positioning plate, wherein the outputting bars are disposed on a side of the positioning plate away from cells, the positioning plate is arranged with a support rib, the inter-module welding portion abuts against the support rib.

The present disclosure further provides a battery module, including the busbar assembly as described in the above.

The present disclosure further provides a battery pack, including an in-series-connection busbar and the battery module as described in the above. The in-series-connection busbar is configured to connect two adjacent battery modules in series with each other. The in-series-connection busbar is connected to the inter-module welding portion. A side of the positioning plate away from the cells is arranged with a plurality of limiting protrusions, the plurality of limiting protrusions extend in a direction away from the cells, the plurality of limiting protrusions are disposed at least on two sides of the in-series-connection busbar; and in the direction away from the cells, a top surface of the plurality of limiting protrusions is higher than the in-series-connection busbar.

According to the present disclosure, the support rib on the positioning plate may support the outputting bar upwards to enable the outputting bar to extend away from the main structure of the positioning plate. In this way, when a welding operation is performed on the outputting bar, the outputting bar is heated and affects only the support rib. Therefore, when the welding operation is performed on the outputting bar, the main structure of the positioning plate is prevented from being burnt by the high temperature. Structural strength and insulating performance of the main structure of the positioning plate are well maintained, and a product yield of the busbar assembly is ensured.

According to the battery module of the present disclosure, the battery module can be easily assembled with high safety.

According to the battery pack of the present disclosure, it is highly safe when two adjacent battery modules are welded to each other. The in-series-connection busbar for connecting two adjacent battery modules can be easily positioned, and the assembling process can be performed highly efficiently.

### BRIEF DESCRIPTION OF THE DRAWINGS

FIG. 1 is a perspective view of a busbar assembly according to some embodiments of the present disclosure.
FIG. 2 is an exploded view of the busbar assembly according to some embodiments of the present disclosure.
FIG. 3 is a perspective view of a positive-electrode positioning plate according to some embodiments of the present disclosure.
FIG. 4 is a bottom view of the positive-electrode positioning plate according to some embodiments of the present disclosure.
FIG. 5 is a perspective view of a negative-electrode positioning plate according to some embodiments of the present disclosure.
FIG. 6 is a bottom view of the negative-electrode positioning plate according to some embodiments of the present disclosure.
FIG. 7 is a perspective view of a positive-electrode outputting plate according to some embodiments of the present disclosure.
FIG. 8 is a perspective view of a negative-electrode outputting plate according to some embodiments of the present disclosure.
FIG. 9 is a structural schematic view of the positive-electrode outputting plate being assembled with the positive-electrode positioning plate according to some embodiments of the present disclosure.
FIG. 10 is a perspective view of a cell according to some embodiments of the present disclosure.
FIG. 11 is a perspective view of a busbar according to some embodiments of the present disclosure.

Reference numerals: 1, busbar assembly; 11, FPC; 111, collection nickel sheet; 112, NTC; 12, first insulating film; 121, second welding hole; 13a, positive-electrode outputting plate; 13b, negative-electrode outputting plate; 131, inter-module welding portion; 1311, first hot-riveting hole; 132, inner-module welding portion; 133a, positive-electrode connection sheet; 133b, negative-electrode connection sheet; 14, busbar; 141, conductive unit; 1411, positive-electrode portion; 1412, negative-electrode portion; 15a, positive-electrode positioning plate; 15b, negative-electrode positioning plate; 151, positioning slot; 1511, notch; 152, support rib; 1521, longitudinal support portion; 1522, transverse support portion; 153, first hot-riveting post; 154, second hot-riveting post; 155, exposure hole; 156, ring-shaped limiting rib; 157, limiting protrusion; 16, second insulating film; 17, first welding hole; 18, second hot-riveting hole; 20, cell; 201, first output end; 202, second output end.

### DETAILED DESCRIPTION

The present disclosure provides a busbar assembly, configured in a battery module. The busbar assembly includes: a busbar-set portion, comprising two outputting bars and a plurality of busbars, wherein, the plurality of busbars are disposed between the two outputting bars, each outputting bar comprises an inter-module welding portion and an inner-module welding portion connected to the inter-module welding portion; and a positioning plate, wherein the outputting bars are disposed on a side of the positioning plate away from cells, the positioning plate is arranged with a support rib, the inter-module welding portion abuts against the support rib.

In some embodiments, each of the two outputting bars is disposed at an end of the battery module in a length direction of the battery module. In one battery module, the inner-module welding portion is extending towards a cell adjacent thereto, a thickness of the inter-module welding portion is greater than a thickness of the inner-module welding portion.

In some embodiments, the positioning plate defines a positioning slot, the inter-module welding portion is embedded in the positioning slot; and the support rib is disposed on an inner wall of the positioning slot.

In some embodiments, the inter-module welding portion defines a first hot-riveting hole that extends through the inter-module welding portion in a thickness direction, a first hot-riveting post is arranged in the positioning slot to rivet with the first hot-riveting hole.

In some embodiments, the busbar assembly further includes a first insulating film and a second insulating film, wherein, the first insulating film is attached to a side of the busbar-set portion away from the cells; and the second insulating film is attached to a side of the busbar-set portion facing towards the cells.

In some embodiments, the inner-module welding portion defines a second hot-riveting hole that extends through the inner-module welding portion in the thickness direction, the first insulating film defines a second hot-riveting hole that extends through the first insulating film in a thickness direction, and the second insulating film defines a second hot-riveting hole that extends through the second insulating film in a thickness direction. The second hot-riveting hole of the inner-module welding portion, the second hot-riveting hole of the first insulating film, and the second hot-riveting hole of the second insulating film correspond to each other. The positioning plate is arranged with a second hot-riveting post riveting with the second hot riveting hole of the inner-module welding portion, the second hot-riveting hole of the first insulating film, and the second hot-riveting hole of the second insulating film.

In some embodiments, a side of the positioning plate facing towards the cells is arranged with a ring-shaped limiting rib configured to limit the cells. Exposure holes are defined in a region surrounded by the ring-shaped limiting rib, a first output end and a second output end of each cell are exposed from a respective one of the exposure holes towards the outputting bar and the busbars, where the first output end is a positive electrode of the cell, and the second output end is a negative electrode of the cell.

In some embodiments, the support rib comprises a longitudinal support portion and a transverse support portion, the longitudinal support portion is disposed on a bottom wall of the positioning slot, and the transverse support portion is disposed on an inner side wall of the positioning slot.

In some embodiments, the first insulating film defines first welding holes that extend through the first insulating film in the thickness direction, the second insulating film defines first welding holes that extend through the second insulating film in the thickness direction, the outputting bars and the busbars are exposed through the first welding holes of the first insulating film and the first welding holes of the second insulating film.

In some embodiments, the busbar assembly further includes an FPC arranged on the first insulating film. The FPC is arranged with a collection nickel sheet, the first insulating film defines a second welding hole that extends through the first insulating film in the thickness direction, and the collection nickel sheet is exposed from the second welding hole.

In some embodiments, a side wall of the positioning slot defines a notch to receive the FPC.

The present disclosure further provides a battery module, including the busbar assembly as described in the above.

The present disclosure further provides a battery pack, including an in-series-connection busbar and the battery module as described in the above. The in-series-connection busbar is configured to connect two adjacent battery modules in series with each other. The in-series-connection busbar is connected to the inter-module welding portion. A side of the positioning plate away from the cells is arranged with a plurality of limiting protrusions, the plurality of limiting protrusions extend in a direction away from the cells, the plurality of limiting protrusions are disposed at least on two sides of the in-series-connection busbar; and in the direction away from the cells, a top surface of the plurality of limiting protrusions is higher than the in-series-connection busbar.

In some embodiments, in the direction away from the cells, a maximum distance between the support rib and the outputting bar is less than a maximum distance between the support rib and the top surface of the limiting protrusions.

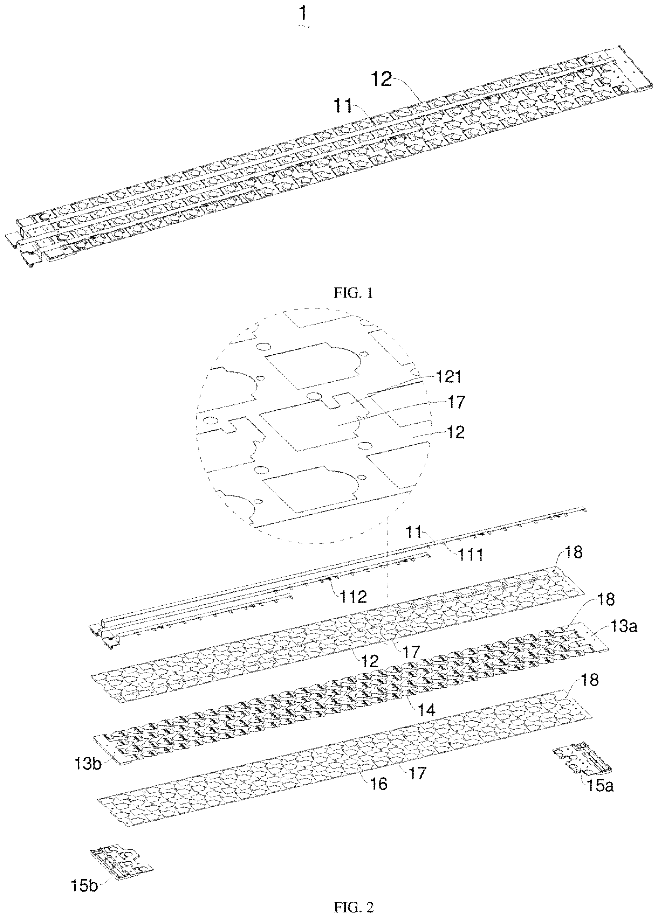

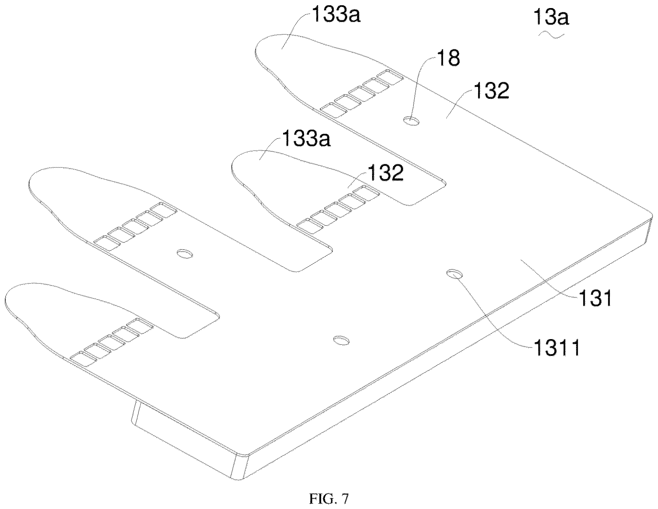

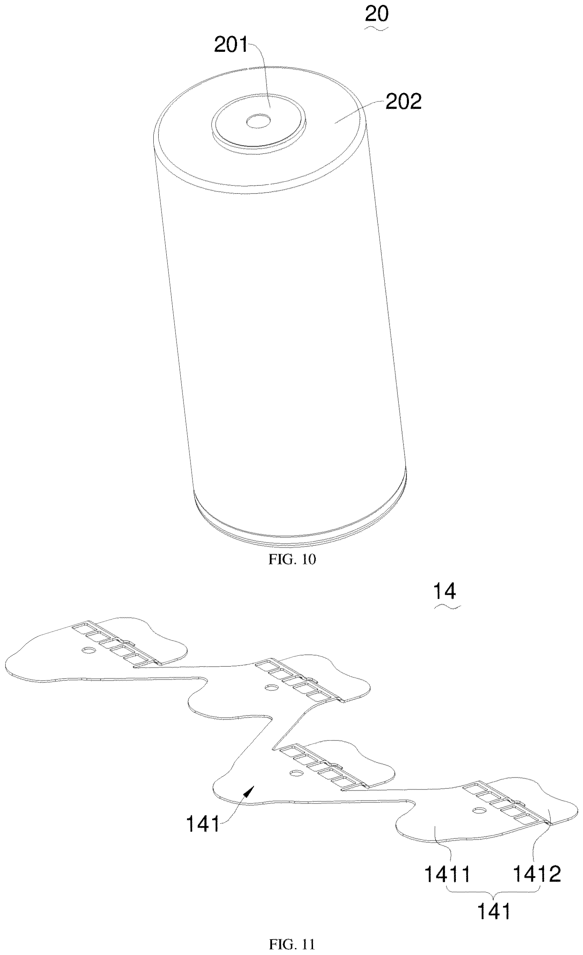

As shown in FIGS. 1 to 11, a bushing assembly is configured for a cylindrical power battery module. A cell 20 is shown in FIG. 10. A first output end 201 and a second output end 202 of the cell 20 are disposed facing towards one side of the busbar assembly 1, where the first output end 201 is the positive electrode of the cell 20, and the second output end 202 is the negative electrode of the cell 20. The busbar assembly 1 includes a busbar-set portion, a first insulating film 12, a second insulating film 16, a positioning plate 15a, and a positioning plate 15b. The first insulating film 12 is attached to a side of the busbar-set portion away from the cell 20. The second insulating film 16 is attached to a side of the busbar-set portion facing towards the cell 20. Each of the first insulating film 12 and the second insulating film 16 includes, but not limited to, a PET film. Components of the busbar-set portion are bonded and fixed, by the first insulating film 12 located on an upper side of the busbar-set portion and the second insulating film 16 located on a lower side of the busbar-set portion as shown in FIG. 2, to each other to form an integrated and one-piece busbar assembly 1 as shown in FIG. 1.

Specifically, the busbar-set portion includes an outputting bar 13a, an outputting bar 13b and a plurality of busbars 14. The plurality of busbars 14 are arranged between two outputting bars 13a and 13b. Each outputting bar includes an inter-module welding portion 131 and an inner-module welding portion 132 connected to the inter-module welding portion 131. The outputting bars are disposed on a side of the positioning plate away from the cell 20. The positioning plate is arranged with a support rib 152. The inter-module welding portion 131 abuts against the support rib 152. In this embodiment, a copper bar or an aluminum bar configured to in-series connect two adjacent battery modules is welded to the inter-module welding portion 131. As shown in FIG. 2, the support rib 152 on the positioning plate may support the outputting bars upwardly to enable the outputting bars, i.e., the inter-module welding portion 131, to be away from the main portion of the positioning plate. In this way, when a welding operation is performed on the inter-module welding portion 131, the inter-module welding portion 131 is heated to affect only the support rib 152. Therefore, when the welding operation is performed on the inter-module welding portion 131, the high temperature of the inter-module welding portion is prevented from burning the main structure of the positioning plate. Structural strength and insulating performance of the main structure of the positioning plate is well maintained, and a product yield of the busbar assembly 1 is ensured.

In this embodiment, the positioning plates are disposed at the two outputting bars, and that is, the two positioning plates are located at two ends of the busbar assembly 1. In this way, structural strength of the busbar assembly 1 is improved to a certain extent, and therefore, the busbar assembly 1 may be easily produced, transferred, and assembled.

As shown in FIGS. 2 and 11, each busbar 14 includes a plurality of conductive units 141. Each conductive unit 141 includes a positive-electrode portion 1411 and a negative-electrode portion 1412 connected to the positive-electrode portion 1411. The conductive unit 141 is configured to connect two adjacent cells 20 in series to each other. Specifically, for one conductive unit 141, the positive-electrode portion 1411 of the conductive unit 141 is welded to the first output end 201 of one cell 20, and the negative-electrode portion 1412 of the conductive unit 141 is welded to the second output end 202 of the same one cell 20. The plurality of busbars 14 are arranged along a length direction of the battery module.

In this embodiment, as shown in FIGS. 2, 7 and 8, the outputting bars are respectively located at two ends of the battery module in the length direction. The positive-electrode outputting bar13a is located at a positive-electrode outputting end of the battery module, and the negative-electrode outputting bar 13b is located at a negative-electrode outputting end of the battery module. Each outputting bar includes a plurality of connection sheets, and the number of the plurality of connection sheets is equal to the number of conductive units 141 that form one busbar 14. The connection sheets of the negative outputting bar 13b are negative-electrode connection sheets 133b connected to the second output ends 202 of the cells 20 located at the negative-electrode outputting end of the battery module. The connection sheets of the positive outputting bar 13a are positive-electrode connection sheets 133a connected to the first output ends 201 of the cells 20 located at the positive-electrode outputting end of the battery module.

In this embodiment, in one battery module, the inner-module welding portion 132 extends towards a cell 20 adjacent thereto. A thickness of the inter-module welding portion 131 is greater than a thickness of the inner-module welding portion 132. The number of inner-module welding portions 132 is equal the number of the conductive units 141 forming one busbar 14, i.e., equal to four. The inner-module welding portions 132 are provided in one-to-one correspondence with the connection sheets. Specifically, the connection sheets are integrally disposed at an end of the inner-module welding portion 132 facing towards the cell 20.

Further, as shown in FIGS. 2 to 6, the positive-electrode positioning plate 15a is disposed corresponding to the positive-electrode outputting bar 13a, and the negative-electrode positioning plate 15b is disposed corresponding to the negative-electrode outputting bar 13b. Specifically, the positioning plate defines a positioning slot 151. The inter-module welding portion 131 is embedded in the positioning slot 151. The support rib 152 is arranged on an inner wall of the positioning slot 151. The positioning slot 151 may position and snap the outputting bar, facilitating assembling of the outputting bar.

Further, the inter-module welding portion 131 defines a first hot-riveting hole 1311. A first hot-riveting post 153 is arranged in the positioning slot 151 that can be riveted with the first hot-riveting hole 1311. The first hot-riveting post 153 is riveted with the first hot-riveting hole 1311 to allow the outputting bar and the positioning plate to be precisely engaged and fixed with each other.

Furthermore, each of the inner-module welding portion 132, the first insulating film 12, and the second insulating film 16 defines a second hot-riveting hole 18, corresponding to each other. The positioning plate is arranged with a second hot-riveting post 154 rivetted with the second hot-riveting hole 18. As shown in FIGS. 1 and 2, in the present embodiment, a region of the positioning plate that corresponds to the inner-module welding portion 132 is located at a lower side of the second insulating film 16. The second hot-riveting post 154 extends through, from a lower side to an upper side, the first insulating film 12 and the second insulating film 16 sequentially, such that the positioning plate is accurately connected to the overall structure formed by the first insulating film 12, the busbar-set portion, and the second insulating film 16 to form an integral structure.

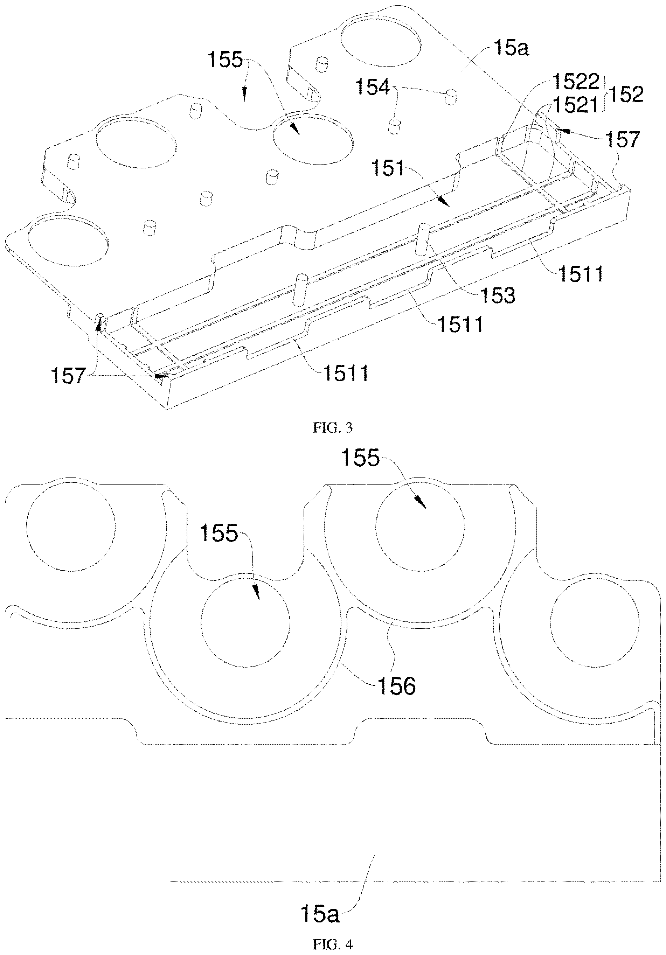

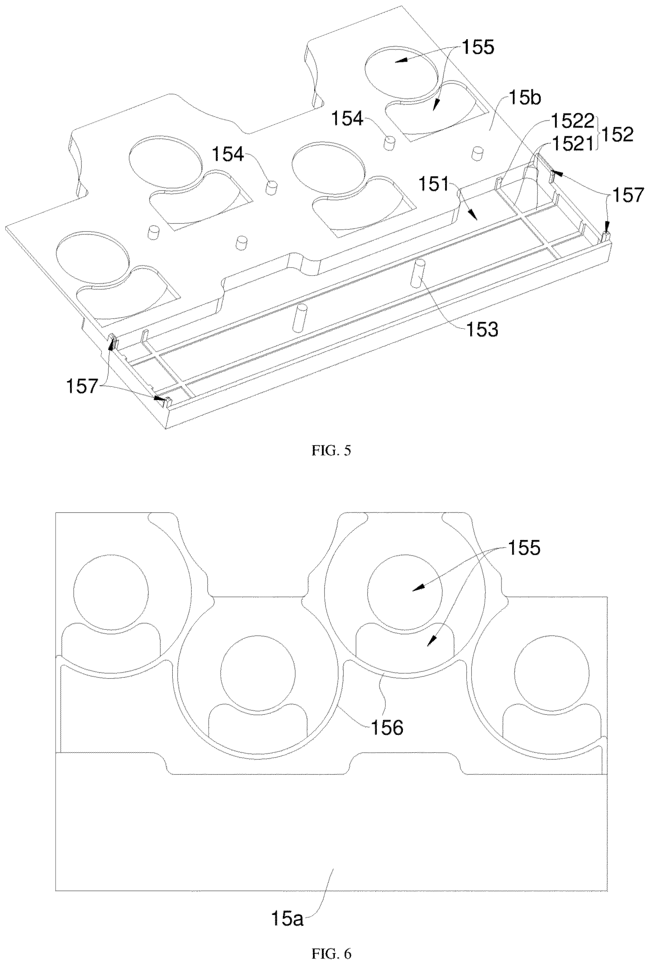

As shown in FIGS. 3 and 5, the support rib 152 includes a longitudinal support portion 1521 and a transverse support portion 1522. The longitudinal support portion 1521 is disposed on a bottom wall of the positioning slot 151. The transverse support portion 1522 is disposed on an inner side wall of the positioning slot 151. In this embodiment, the longitudinal support portion 1521 at the bottom wall of the positioning slot 151 provides an upward support force for the inter-module welding portion 131, protecting the bottom wall of the positioning slot 151 from being burned. Accordingly, the transverse support portion 1522 at the inner side wall of the positioning slot 151 provides a support force for the inter-module welding portion 131 in a direction parallel to the extending direction of the bottom wall of the positioning slot 151, such that the inner side wall of the positioning slot 151 is protected from being burnt.

In this embodiment, the arrangement of the longitudinal support portion 1521 on the bottom wall of the positioning slot 151 and the arrangement of the transverse support portion 1522 on the inner side wall of the positioning slot 151 are preferred embodiments. In other embodiments, the arrangements may be appropriately adjusted as required, as long as the above-mentioned support for the inter-module welding portion 131 can be achieved.

As shown in FIGS. 4 and 6, a side of the positioning plate facing towards the cell 20 is arranged with a ring-shaped limiting rib 156 configured to limit the cell 20. Exposure holes 155 are defined in a region surrounded by the ring-shaped limiting rib 156, and the first output end 201 and the second output end 202 of the cell 20 are exposed from one respective exposure hole 155 towards the outputting bars and the busbars 14. The ring-shaped limiting rib 156 is configured to limit and snap the cell 20 as shown in FIG. 10. After the busbar assembly 1 is assembled with the cell 20, the first output ends 201 and the second output ends 202 of the cells 20, which are located at the end of the battery module, pass through the corresponding exposure holes 155 to abut against the corresponding connection sheets of the outputting bars. In addition, during assembling the busbar assembly 1 with the cells 20 to form the battery module, the exposure holes 155 facilitates positioning and assembling between the busbar assembly 1 and the cells 20.

As shown in FIG. 2, each of the first insulating film 12 and the second insulating film 16 defines first welding holes 17 that respectively extend through the first insulating film 12 and the second insulating film 16 in a thickness direction. The outputting bars and the busbars 14 are exposed from the first welding holes 17. By defining the first welding holes 17, it is ensured that the conductive units 141, i.e., the busbars 14, are welded to the cells 20 while the remaining portions of the busbars 14 are insulated from the cells 20, such that safety of the busbar assembly 1, when being in use, is improved. During assembling the busbar assembly 1 with the cells 20, the first welding holes 17 may facilitate positioning therebetween, and assembling precision between the busbar assembly 1 and the cells 20 may be improved. In this embodiment, the first welding holes 17 on the first insulating film 12 are located in correspondence with the first welding holes 17 on the second insulating film 16.

As shown in FIGS. 1 to 3, in order to monitor the battery module, the busbar assembly 1 further includes an FPC 11. The FPC 11 is arranged on the first insulating film 12. The FPC11 is arranged with collection nickel sheets 111. The first insulating film 12 defines second weld holes 121 that extend through the first insulating film 12 in the thickness direction, and the collection nickel sheets 111 are exposed from the second welding holes 121. In some embodiments, the FPC 11 is adhered to a side of the first insulating film 12 away from the busbar-set portion. The collection nickel sheets 111 are welded to the busbar-set portion through the second welding holes 121 and are configured to collect voltage signals of the battery module. In addition, the FPC11 is further arranged with negative temperature coefficient sensors (NTCs) 112. The NTCs 112 are connected to the busbar-set portion through the second welding holes 121 and are configured to collect temperature signals of the battery module.

Further, as shown in FIGS. 2 and 3, a side wall of the positioning slot 151 defines a notch 1511 to receive the FPC 11. In this embodiment, an output end of the FPC 11 extends from the positive-electrode positioning plate 15a and is received in the notch 1511 defined in the side wall of the positioning slot 151 at the positive-electrode positioning plate 15a. In this way, interference between the FPC 11 and the positive-electrode positioning plate 15a is prevented, furthermore, the FPC 11 is facilitated to be positioned and assembled at the positive-electrode positioning plate 15a

It is to be understood that, when the output end of the FPC 11 extends from the negative-electrode positioning plate 15b, the side wall of the positioning slot 151 at the negative-electrode positioning plate 15b also defines the notch 1511.

The present embodiment further provides a battery module including the cells 20 and the above-mentioned busbar assembly 1. The busbar assembly 1 of the battery module can be easily assembled with the cells 20 with high safety.

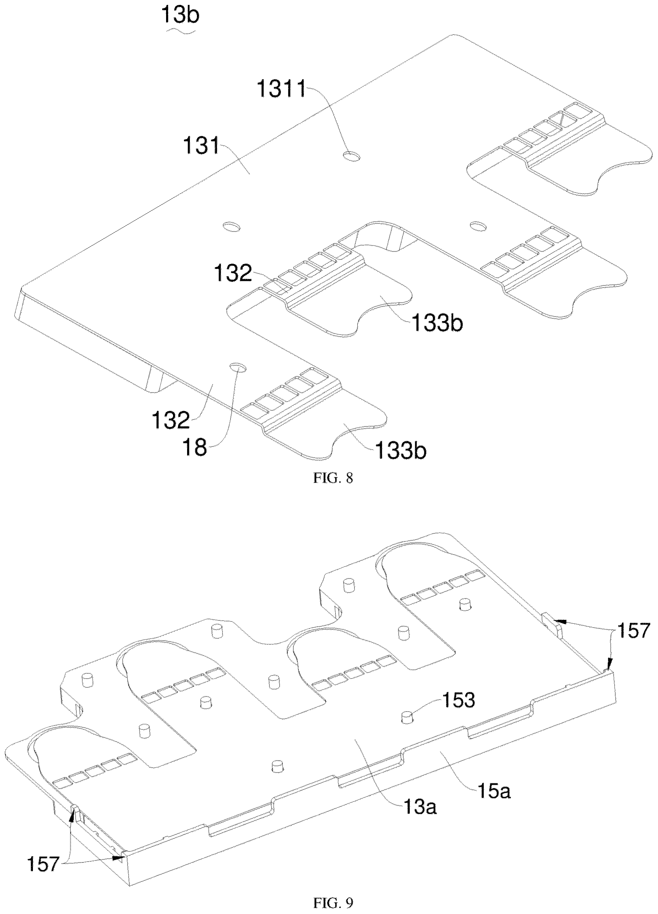

The present embodiment further provides a battery pack, including an in-series-connection busbar (not shown in the drawings) and battery modules as described above. The in-series-connection busbar is configured to connect two adjacent battery modules in series with each other. The in-series-connection busbar is connected to the inter-module welding portion 131. A side of the positioning plate away from the cells 20 is arranged with limiting protrusions 157. The limiting protrusions 157 extend in a direction of away from the cells 20. The limiting protrusions 157 are disposed on at least two sides of the in-series-connection busbar. In the direction away from the cells 20, a top surface of the limiting protrusions 157 are higher than the in-series-connection busbar. As shown in FIG. 9, the limiting protrusions 157 disposed at the at least two sides of the in-series-connection busbar may pre-position the in-series-connection busbar, such that the in-series-connection busbar may be positioned and mounted easily when the two adjacent battery modules are connected to each other in series, and assembling precision of the in-series-connection busbar may be improved. In some embodiments, the limiting protrusions 157 are disposed at least at corners of the positioning slot 151. In the length direction of the battery module, a limiting space is defined between two adjacent limiting protrusions 157 to receive the in-series-connection busbar.

Further, in the direction away from the cells 20, a maximum distance between the support rib 152 and the outputting bar is less than a maximum distance between the support rib 152 and the top surface of the limiting protrusion 157. In this way, it is ensured that, after the outputting bar is assembled to the support rib 152, the limiting protrusions can position the in-series-connection busbar.

## Claims

1. A busbar assembly (1), configured in a battery module, the busbar assembly (1) comprising:
a busbar-set portion, comprising two outputting bars (13a, 13b) and a plurality of busbars (14), wherein, the plurality of busbars (14) are disposed between the two outputting bars (13a, 13b), each outputting bar comprises an inter-module welding portion (131) and an inner-module welding portion (132) connected to the inter-module welding portion (131); and
a positioning plate (15a, 15b), wherein the outputting bars (13a, 13b) are disposed on a side of the positioning plate (15a, 15b) away from cells (20), the positioning plate (15a, 15b) is arranged with a support rib (152), the inter-module welding portion (131) abuts against the support rib (152).

2. The busbar assembly (1) according to claim 1, wherein, each of the two outputting bars (13a, 13b) is disposed at an end of the battery module in a length direction of the battery module;
in one battery module, the inner-module welding portion (132) is extending towards a cell adjacent thereto, a thickness of the inter-module welding portion (131) is greater than a thickness of the inner-module welding portion (132).

3. The busbar assembly (1) according to claim 2, wherein, the positioning plate (15a, 15b) defines a positioning slot (151), the inter-module welding portion (131) is embedded in the positioning slot (151); and the support rib (152) is disposed on an inner wall of the positioning slot (151).

4. The busbar assembly (1) according to claim 3, wherein, the inter-module welding portion (131) defines a first hot-riveting hole (1311) that extends through the inter-module welding portion (131) in a thickness direction, a first hot-riveting post (153) is arranged in the positioning slot (151) to rivet with the first hot-riveting hole (1311).

5. The busbar assembly (1) according to claim 3 or 4, further comprising a first insulating film (12) and a second insulating film (16), wherein, the first insulating film (12) is attached to a side of the busbar-set portion away from the cells (20); and the second insulating film (16) is attached to a side of the busbar-set portion facing towards the cells (20).

6. The busbar assembly (1) according to claim 5, wherein, the inner-module welding portion (132) defines a second hot-riveting hole (18) that extends through the inner-module welding portion (132) in a thickness direction, the first insulating film (12) defines a second hot-riveting hole (18) that extends through the first insulating film (12) in a thickness direction, and the second insulating film (16) defines a second hot-riveting hole (18) that extends through the second insulating film (16) in a thickness direction;
the second hot-riveting hole (18) of the inner-module welding portion (132), the second hot-riveting hole (18) of the first insulating film (12), and the second hot-riveting hole (18) of the second insulating film (16) correspond to each other; and
the positioning plate (15a, 15b) is arranged with a second hot-riveting post (154) riveting with the second hot riveting hole of the inner-module welding portion (132), the second hot-riveting hole (18) of the first insulating film (12), and the second hot-riveting hole (18) of the second insulating film (16).

7. The busbar assembly (1) according to any one of claims 1 to 4, wherein, a side of the positioning plate (15a, 15b) facing towards the cells (20) is arranged with a ring-shaped limiting rib (156) configured to limit the cells (20);
exposure holes (155) are defined in a region surrounded by the ring-shaped limiting rib (156), a first output end and a second output end of each cell are exposed from a respective one of the exposure holes (155) towards the outputting bar and the busbars (14); the first output end is a positive electrode of the cell, and the second output end is a negative electrode of the cell.

8. The busbar assembly (1) according to claim 3 or claim 4, wherein, the support rib (152) comprises a longitudinal support portion (1521) and a transverse support portion (1522), the longitudinal support portion (1521) is disposed on a bottom wall of the positioning slot (151), and the transverse support portion (1522) is disposed on an inner side wall of the positioning slot (151).

9. The busbar assembly (1) according to claim 5, wherein, the first insulating film (12) defines first welding holes (17) that extend through the first insulating film (12) in a thickness direction, the second insulating film (16) defines first welding holes (17) that extend through the second insulating film (16) in a thickness direction, the outputting bars (13a, 13b) and the busbars (14) are exposed through the first welding holes (17) of the first insulating film (12) and the first welding holes (17) of the second insulating film (16).

10. The busbar assembly (1) according to claim 5, further comprising an FPC (11) arranged on the first insulating film (12), wherein, the FPC (11) is arranged with a collection nickel sheet (111), the first insulating film (12) defines a second welding hole (121) that extends through the first insulating film (12) in a thickness direction, and the collection nickel sheet is exposed from the second welding hole (121).

11. The busbar assembly (1) according to claim 10, wherein, a side wall of the positioning slot (151) defines a notch (1511) to receive the FPC (11).

12. A battery module, comprising the busbar assembly (1) according to any one of claims 1 to 11.

13. A battery pack, comprising an in-series-connection busbar and the battery module according to claim 12, wherein, the in-series-connection busbar is configured to connect two adjacent battery modules in series with each other;
the in-series-connection busbar is connected to the inter-module welding portion (131);
a side of the positioning plate (15a, 15b) away from the cells (20) is arranged with a plurality of limiting protrusions (157), the plurality of limiting protrusions (157) extend in a direction away from the cells (20), the plurality of limiting protrusions (157) are disposed at least on two sides of the in-series-connection busbar; and in the direction away from the cells (20), a top surface of the plurality of limiting protrusions (157) is higher than the in-series-connection busbar.

14. The battery pack according to claim 13, wherein, in the direction away from the cells (20), a maximum distance between the support rib (152) and the outputting bar is less than a maximum distance between the support rib (152) and the top surface of the limiting protrusions (157).
